(19) Europäisches Patentamt
European Patent Office
Office européen des brevets

(11) **EP 4 546 474 A1**

(12) **EUROPEAN PATENT APPLICATION**

(43) Date of publication:
**30.04.2025 Bulletin 2025/18**

(21) Application number: **23306877.4**

(22) Date of filing: **27.10.2023**

(51) International Patent Classification (IPC):
**H01M 8/04029** (2016.01)    **H01M 8/04007** (2016.01)
**H01M 8/04089** (2016.01)    **H01M 8/04119** (2016.01)
**H01M 8/04291** (2016.01)    *B61C 3/00* (2006.01)

(52) Cooperative Patent Classification (CPC):
**H01M 8/04291; B61C 3/00; B61C 17/00;
H01M 8/04029; H01M 8/04059; H01M 8/04089;
H01M 8/04149;** H01M 2200/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ALSTOM Holdings
93400 Saint-Ouen-sur-Seine (FR)**

(72) Inventor: **AUDEMAR, Christophe
65310 HORGUES (FR)**

(74) Representative: **Lavoix
2, place d'Estienne d'Orves
75441 Paris Cedex 09 (FR)**

Remarks:
Amended claims in accordance with Rule 137(2) EPC.

(54) **A RAILWAY VEHICLE COMPRISING A FUEL CELL POWER MODULE AND A SYSTEM FOR PRODUCING COOLING AIR USING RESIDUAL WATER**

(57)    A railway vehicle (10) comprising:
- a propulsion module (12),
- a fuel cell power module (14),
- a cooling cycle (18) comprising at least one heat exchanger (34) for receiving a stream of heated refrigerant (36) from the fuel cell power module and a stream of cooling air (30), and for producing a stream of cooled refrigerant (38) and a stream of heated air (40), the fuel cell power module being adapted for receiving the stream of cooled refrigerant and producing the stream of heated refrigerant,
- a reservoir (20) for collecting residual water (22) from the fuel cell power module,
- a precooling system (24) for receiving a stream of water (26) from the reservoir and a stream of air (28) and for evaporating part of the stream of water in the stream of air in order to obtain the stream of cooling air.

FIG.1

**Description**

The present invention deals with a railway vehicle comprising a propulsion module using power.

The invention also deals with a corresponding process involving such a vehicle.

Nowadays, in soon to exist railway vehicles, it is contemplated using an on board fuel cell power module to provide power to the propulsion module while reducing carbon dioxide (CO2) emissions. This allows consuming hydrogen locally instead of power from a grid.

However, in operation, fuel cells generate a significant amount of heat. A cooling system is needed to maintain the fuel cell power module at a normal working temperature.

One known solution consists in using a refrigerant, such as water, to cool the fuel cell power module. The fuel cell power module receives a stream of cooled refrigerant, and produces a stream of heated refrigerant, typically at 70-75°C. The refrigerant is then cooled in one or several heat exchangers in order to produce the stream of cooled refrigerant.

In on board solutions being currently studied, the cooling system includes one or several bulky heat exchangers fed with a large quantity of cooling air by powerful fans. They require several square meters and air volume flows of several tens of cubic meter per second. As a consequence, the cooling system consumes a lot of power to run the fans and may occupy more than 50% of the volume of the fuel cell power pack (i.e. the fuel cell power module and its nearby auxiliary systems, such as hydrogen pump, filtration device, compressor...). Of course, this ratio somewhat depends on the features of the fuel cells. However, costs are negatively impacted.

An aim of the invention is to provide a railway vehicle allowing reduced CO2 emissions, but also cost efficient.

To this end, the invention proposes a railway vehicle comprising:

- a propulsion module,
- a fuel cell power module adapted for providing power to the propulsion module,
- a cooling cycle adapted for cooling the fuel cell power module, and comprising at least one heat exchanger configured for receiving at least one stream of heated refrigerant from the fuel cell power module and at least one stream of cooling air, and for producing at least one stream of cooled refrigerant and at least one stream of heated air, the fuel cell power module being adapted for receiving the stream of cooled refrigerant and producing the stream of heated refrigerant,
- a reservoir adapted for collecting residual water from the fuel cell power module, and
- a precooling system adapted for receiving at least one stream of water from the reservoir and at least one stream of air and for evaporating part of the stream of water in the stream of air in order to cool the stream of air and obtain the stream of cooling air.

In other embodiments, the vehicle comprises one or several of the following features, taken in isolation or any technically feasible combination:

- the fuel cell power module is configured to receive at least part of the stream of heated air and use at least part of the stream of heated air as an oxidizer in order to produce the power;
- the precooling system is adapted for returning a non-evaporated part of the stream of water to the reservoir;
- the vehicle comprises at least one fan adapted for moving the stream of cooling air with respect to the heat exchanger, the fan being also adapted for moving the stream of air with respect to the precooling system;
- the fan is located downstream of the heat exchanger and intended to be surrounded by the stream of heated air coming from the heat exchanger;
- the precooling system is configured to have an efficiency $\varepsilon$ greater than 80%, preferably greater than or equal to 85%, at least when a dry-bulb temperature $T_{i,db}$ of the stream of air is comprised between 35°C and 42°C and the stream of air has a relative humidity comprised between 8% and 70%, wherein $\varepsilon = (T_{i,db} - T_{o,db}) / (T_{i,db} - T_{i,wb})$,

    $T_{o,db}$ being a dry-bulb temperature of the stream of cooling air, and
    $T_{i,wb}$ being a wet-bulb temperature of the stream of air;

- the precooling system comprises a material permeable to water and defining a plurality of ducts having inlets at an inlet surface of the material, and outlets at an outlet surface of the material, the precooling system being adapted for contacting the stream of water with an upper part of the material, the stream of water being intended to soak the material, to move downwards by gravity and progressively evaporate in the ducts, the stream of air being intended to split into the ducts and provide the stream of cooling air at the outlets of the ducts;
- the material comprises a lower part adapted to receive the non-evaporated part of the stream of water, the non-evaporated part being intended to exit the lower part by gravity and flow toward the reservoir;
- the material forms a layer extending perpendicularly to a first direction defined by the vehicle, the first direction being horizontal when the vehicle moves on a horizontal surface;
- the layer has a thickness in said first direction comprised between 10 and 20 cm, preferably between 13 and 17 cm, and more preferably of approximately 15 cm;
- the first direction is perpendicular to a normal movement direction of the vehicle;
- the precooling system comprises a second layer of said material, and the cooling cycle comprises a second heat exchanger connected in parallel with the heat exchanger with respect to the stream of heated refrigerant, the second layer and the second heat exchanger being located symmetrically of the layer and the heat exchanger with respect to a median plane of the vehicle, the median plane being perpendicular to the first direction; and
- the ducts are inclined by at least 10° with respect to a plane defined by the vehicle and horizontal when the vehicle moves on a horizontal surface.

The invention also proposes a process comprising the following steps:

- obtaining a vehicle as described above,
- providing said power to the propulsion module,
- using the cooling cycle in order to cool the fuel cell power module, the heat exchanger receiving the stream of heated refrigerant from the fuel cell power module and the stream of cooling air, and producing the stream of cooled refrigerant and the stream of heated air, the fuel cell power module receiving the stream of cooled refrigerant and producing the stream of heated refrigerant,
- using the reservoir in order to collect the residual water from the fuel cell power module, and
- using the precooling system in order to receive the stream of water from the reservoir and the stream of air, to evaporate said part of the stream of water in the stream of air, and to cool the stream of air and obtain the stream of cooling air.

The invention and its advantages will be better understood upon reading the following description, given solely by way of example and with reference to the appended drawings, in which:

- Figure 1 is a schematic view of a railway vehicle according to the invention,
- Figure 2 is schematic perspective view of a layer of material of the cooling system shown in Figure 1, and
- Figure 3 is a schematic upper view of a vehicle analogous to the one shown in Figures 1 and 2, but according to a particular layout.

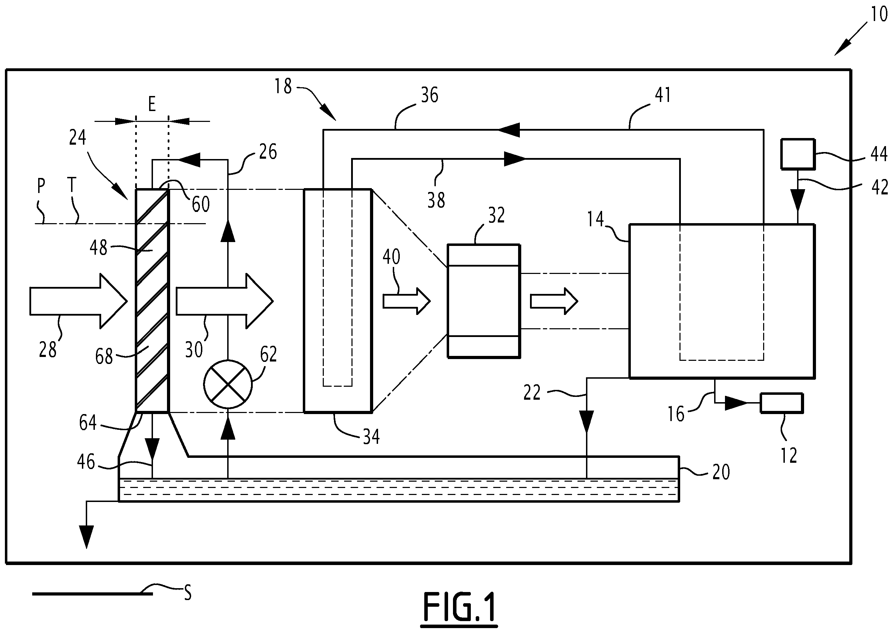

A railway vehicle 10 according to the invention will now be described with reference to Figure 1.

The vehicle 10 is for example a train having one or several cars (not shown).

The vehicle 10 comprises a propulsion module 12, a fuel cell power module 14 adapted for providing power 16 to the propulsion module, and a cooling cycle 18 adapted for cooling the fuel cell power module. The vehicle 10 comprises a reservoir 20 adapted for collecting residual water 22 from the fuel cell power module 14, and a precooling system 24 adapted for receiving at least one stream of water 26 from the reservoir and at least one stream of air 28 and for evaporating part of the stream of water in the stream of air in order to cool the stream of air and obtain a stream of cooling air 30.

For example, the vehicle 10 comprises a fan 32 adapted for moving the stream of cooling air 30 with respect to a heat exchanger 34 of the cooling cycle 18, the fan being also advantageously adapted for moving the stream of air 28 with respect to the precooling system 24.

The heat exchanger 34 is configured for receiving at least one stream of heated refrigerant 36 from the fuel cell power module 14, and the stream of cooling air 30, and for producing a stream of cooled refrigerant 38 and a stream of heated air 40.

The cooling cycle 18 advantageously forms a closed loop 41 for the refrigerant.

The refrigerant is for example water.

The fuel cell power module 14 is adapted for receiving the stream of cooled refrigerant 38 and producing the stream of heated refrigerant 36.

Advantageously, the fuel cell power module 14 is configured to receive at least part of the stream of heated air 40 and use said part as an oxidizer in order to produce the power 16.

The fuel cell power module 14 is for example configured to receive hydrogen 42 from a source 44 of the vehicle 10 and for producing the residual water 22 by reacting the hydrogen with said oxidizer.

The precooling system 24 is advantageously adapted for returning a non-evaporated part 46 of the stream of water 26 to the reservoir 20.

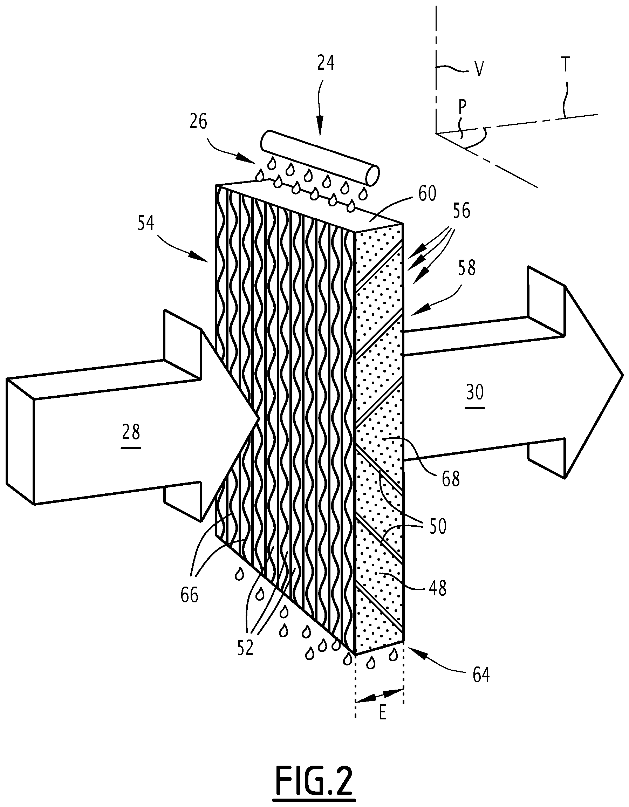

The precooling system 24 advantageously comprises a material 48 permeable to water and defining a plurality of ducts 50 (Figure 2) having inlets 52 at an inlet surface 54 of the material, and outlets 56 at an outlet surface 58 of the material. The precooling system 24 is advantageously adapted for contacting the stream of water 26 with an upper part 60 of the material 48, the stream of water 26 being intended to soak the material, to move downwards by gravity and progressively evaporate in the ducts 50, the stream of air 28 being intended to split into the ducts and provide the stream of cooling air 30 at the outlets 56 of the ducts.

For example, the precooling system 24 includes a water pump 62 in order to pump the stream of water 26 from the reservoir 20 and to release the stream of water above said upper part 60.

As a variant (not shown), the reservoir 20 is above the upper part 60 and no pump is used.

The material 48 for example comprises a lower part 64 adapted to receive the non-evaporated part 46 of the stream of water 26, the non-evaporated part being intended to exit the lower part 64 by gravity and flow toward the reservoir 20.

The material 48 advantageously comprises a stack of corrugated sheets 66 of impregnated cellulose forming the ducts 50, and is for example made of CELdek®.

Advantageously, the material 48 forms a layer 68 extending perpendicularly to a first direction T defined by the vehicle 10, the first direction T being preferably horizontal when the vehicle moves on a horizontal surface S. In other words, the layer 68 is preferably vertical.

The layer 68 has a thickness E in said first direction T, for example comprised between 10 and 20 cm, preferably between 13 and 17 cm, and more preferably of approximately 15 cm.

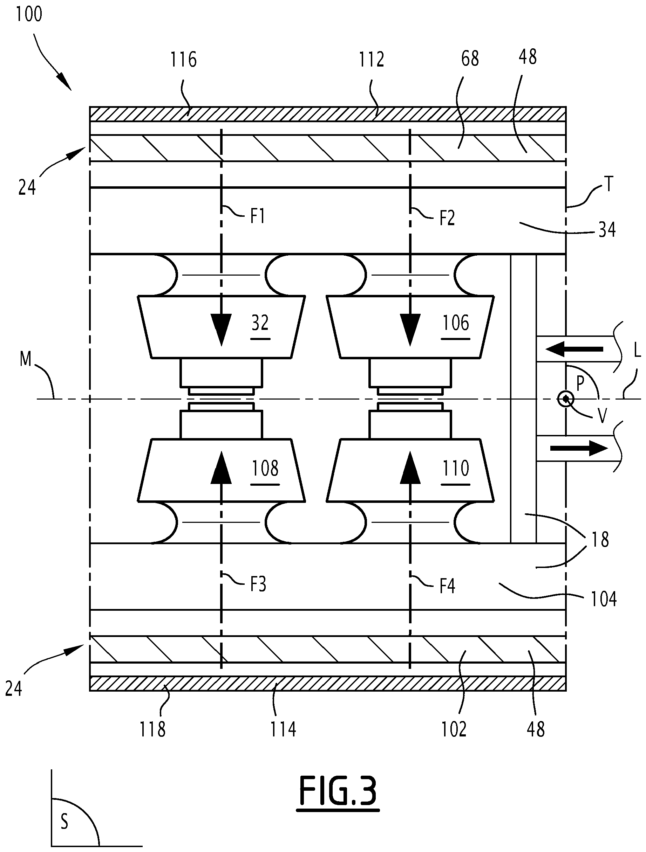

In a particular embodiment, such as the one show in Figure 3, the first direction T is perpendicular to a normal movement direction L of the vehicle.

Advantageously, the ducts 50 are inclined by at least 10° with respect to a plane P defined by the vehicle 10 and horizontal when the vehicle moves on a horizontal surface S. This allows water to flow on walls of the ducts 50 by gravity, thus increasing an exchange surface (not shown) between water and gas in the ducts.

The precooling system 24 is advantageously configured to have an efficiency $\varepsilon$ greater than 80%, preferably greater than or equal to 85%, at least when a dry-bulb temperature $T_{i,db}$ of the stream of air 28 is comprised between 35°C and 42°C and the stream of air has a relative humidity comprised between 8% and 70%. The efficiency $\varepsilon$ may depend on the flow rate in the upper part 60.

The efficiency $\varepsilon$ of the precooling system 24 may be defined by the following formula:

$$\varepsilon = \left(T_{i,db} - T_{o,db}\right) / \left(T_{i,db} - T_{i,wb}\right),$$

where $T_{o,db}$ is a dry-bulb temperature of the stream of cooling air 30, and $T_{i,wb}$ is a wet-bulb temperature of the stream of air 28.

The skilled person will understand that the efficiency $\varepsilon$ may depend on the relative humidity and dry-bulb temperature $T_{i,db}$ of the incoming stream of air 28, that is why the efficiency $\varepsilon$ is specified for a certain range of these parameters.

An efficiency of 100% means that dry-bulb temperature $T_{o,db}$ of the stream of cooling air 30 is equal to the wet-bulb temperature $T_{i,wb}$ of the stream of air 28. In other words, evaporation is maximum and the stream of cooling air 30 is saturated with water.

An efficiency of 0% would mean that $T_{o,db}$ remains equal to $T_{i,db}$. In other words, there is no evaporation and no cooling.

The efficiency $\varepsilon$ can be increased for example by using a thicker layer 68 of material. However, this increases pressure drops and requires a larger quantity of material 48.

It has been determined that an efficiency $\varepsilon$ of about 85% is advantageous.

The operation of the vehicle 10 stems from its structure and will now be briefly described as an example of process according to the invention.

As shown in Figure 1, the fuel cell power module 14 receives the hydrogen 42 from the source 44. The hydrogen 42 reacts with an oxidizer, advantageously humid air from the stream of heated air 40 coming from the heat exchanger 34. Power 16 is produced by the fuel cell power module 14 and consumed by the propulsion module 12. Heat is also generated in the fuel cell power module 14. At least some of the residual water 22 produced by the reaction of the hydrogen 42 with the oxidizer goes to the reservoir 20. It is estimated that a fuel cell power module of 330 kW, for example, will produce approximately 103 liters of residual water per hour.

The stream of cooled refrigerant 38 takes that heat and becomes the stream of heated refrigerant 36.

The stream of heated refrigerant 36 is received and cooled in the heat exchanger 34 against the stream of cooling air 30, and becomes the stream of cooled refrigerant 38. The stream of cooling air 30 is heated in the heat exchanger 34 and becomes the stream of heated air 40.

The stream of heated air 40, the stream of cooling air 30 and the stream of air 28 are moved by the fan 32 in the example.

The stream of cooling air 30 is precooled by the precooling system 24. The pump 62 brings the stream of water 26 to the upper part 60 of the material 48. The stream of water 26 soaks the material 48. Water moves downwards by gravity and progressively evaporates in the ducts 50. The non-evaporated part 46 for example returns to the reservoir 20.

The reservoir 20 may be purged, if too full.

The stream of air 28 divides into the ducts 50 and is put in contact with water soaking the material 48. Due to water evaporation, the temperature of the stream of air 28 decreases. The streams exiting the material 48 form the stream of cooling air 30 and has the temperature $T_{o,db}$, somewhere between $T_{i,db}$ and $T_{i,wb}$, depending on the efficiency $\varepsilon$.

According to a particular way of operating the vehicle 10, the precooling system 24 works on a continuous basis, in order to precool the air used in the heat exchanger 34. This consumes water from the reservoir 20 on a regular basis.

According to another way of operating the vehicle 10, the precooling system 24 is used on discontinuous basis, by soaking water on the material 48 at specific moments, for example when a greater power is needed by the propulsion module 12. In other words, water from the reservoir 20 is used when a peak of power is needed.

Thanks to the above described features, at least when the precooling system 24 is active, the stream of cooling air 30 is cooler than the stream of air 28. This increases the efficiency of the heat exchanger 34, and decreases the amount of cooling air needed, thus the amount of energy needed to obtain and move the stream of cooling air 30. For example, each time the temperature of the stream of cooling air 30 is reduced by 1°C, the efficiency of the heat exchanger 34 is increased by approximately 5%, all other things being equal. The cooling cycle can be made more compact. Thus, the vehicle 10 is more efficient and allows reducing the costs.

Besides, if part of the stream of heated air 40 is used as an oxidizer, depending on the technology of the fuel cell power module 14, this may increase the energy recovery in the fuel cell power module, as the oxidizer is more humid thanks to the precooling system 24.

Examples

Example 1. The dry-bulb temperature $T_{i,db}$ of the stream of air 28 (temperature of the atmosphere) is 42°C, its relative humidity is 8%, the efficiency $\varepsilon$ is 85%, then the dry-bulb temperature $T_{o,db}$ of the stream of cooling air 30 (i.e. the temperature of the cooling air entering the heat exchanger 34) is 22.4°C. This represents a gain of 20°C (42°C minus 22°C).

Example 2. The dry-bulb temperature $T_{i,db}$ of the stream of air is 35°C, its relative humidity is 55%, the efficiency $\varepsilon$ is 85%, then the dry-bulb temperature $T_{o,db}$ of the stream of cooling air is 28.2°C. This represents a gain of 6.8°C.

Example 3. The dry-bulb temperature $T_{i,db}$ of the stream of air is 35°C, its relative humidity is 70%, the efficiency $\varepsilon$ is 85%, then the dry-bulb temperature $T_{o,db}$ of the stream of cooling air is 30.7°C. This represents a gain of 4.3°C.

A vehicle 100 according to a particular embodiment of the invention will now be described with reference to Figure 3. The vehicle 100 is analogous to the vehicle 10 shown in Figures 1 and 2. Similar elements bear the same numeral references and will not be described again. Only the differences will be described in detail hereafter.

In the vehicle 100, the precooling system 24 comprises a second layer 102 of said material 48, and the cooling cycle 18 comprises a second heat exchanger 104 connected in parallel with the heat exchanger 34 with respect to the refrigerant.

In the example, the vehicle 100 comprises the fan 32, and three other fans 106, 108, 110.

The second layer 102 and the second heat exchanger 104 are located symmetrically of the layer 68 and the heat exchanger 34 with respect to a median plane M of the vehicle 100, the median plane being perpendicular to the first direction T (perpendicular to the layer 68 of material).

For example, the median plane M is parallel to a normal movement direction L of the vehicle, and vertical when the vehicle 100 moves on a horizontal surface S. The first direction T is a transverse direction of the vehicle 100.

The layer 68 of material and the second layer 102 of material are advantageously located near and parallel to two lateral grids 112, 114 of the vehicle 100 respectively. The grids 112, 114 are for example located in walls 116, 118 of the vehicle 100 that are opposite each other in the first direction T.

The heat exchanger 34 is advantageously located on the other side of the layer 68 of material with respect to the grid 112. The second heat exchanger 104 is advantageously located on the other side of the second layer 102 of material with respect to the grid 114.

The fans 32, 106 are adapted for sucking air (arrows F1, F2) successively through the grid 112, the layer 68 of material and the heat exchanger 34. The fans 108, 110 are adapted for sucking air (arrows F3, F4) successively through the grid 114, the second layer 102 of material and the second heat exchanger 104.

Thanks to the above features, the precooling system 24 and the cooling cycle 18 of the vehicle 100 are particularly compact.

**Claims**

1. A railway vehicle (10; 100) comprising:

   - a propulsion module (12),
   - a fuel cell power module (14) adapted for providing power (16) to the propulsion module (12),
   - a cooling cycle (18) adapted for cooling the fuel cell power module (14), and comprising at least one heat exchanger (34) configured for receiving at least one stream of heated refrigerant (36) from the fuel cell power module (14) and at least one stream of cooling air (30), and for producing at least one stream of cooled refrigerant (38) and at least one stream of heated air (40), the fuel cell power module (14) being adapted for receiving the stream of cooled refrigerant (38) and producing the stream of heated refrigerant (36),
   - a reservoir (20) adapted for collecting residual water (22) from the fuel cell power module (14), and
   - a precooling system (24) adapted for receiving at least one stream of water (26) from the reservoir (20) and at least one stream of air (28) and for evaporating part of the stream of water (26) in the stream of air (28) in order to cool the stream of air (28) and obtain the stream of cooling air (30).

2. The vehicle (10; 100) according to claim 1, wherein the fuel cell power module (14) is configured to receive at least part of the stream of heated air (40) and use at least part of the stream of heated air (40) as an oxidizer in order to produce the power (16).

**3.** The vehicle (10; 100) according to claim 1 or 2, wherein the precooling system (24) is adapted for returning a non-evaporated part (46) of the stream of water (26) to the reservoir (20).

**4.** The vehicle (10; 100) according to any one of claims 1 to 3, further comprising at least one fan (32) adapted for moving the stream of cooling air (30) with respect to the heat exchanger (34), the fan (32) being also adapted for moving the stream of air (28) with respect to the precooling system (24).

**5.** The vehicle (10; 100) according to claim 4, wherein the fan (32) is located downstream of the heat exchanger (34) and intended to be surrounded by the stream of heated air (40) coming from the heat exchanger (34).

**6.** The vehicle (10; 100) according to any one of claims 1 to 5, wherein the precooling system (24) is configured to have an efficiency $\varepsilon$ greater than 80%, preferably greater than or equal to 85%, at least when a dry-bulb temperature $T_{i,db}$ of the stream of air (28) is comprised between 35°C and 42°C and the stream of air (28) has a relative humidity comprised between 8% and 70%, wherein $\varepsilon = (T_{i,db} - T_{o,db}) / (T_{i,db} - T_{i,wb})$,

> $T_{o,db}$ being a dry-bulb temperature of the stream of cooling air (30), and
> $T_{i,wb}$ being a wet-bulb temperature of the stream of air (28).

**7.** The vehicle (10; 100) according to any one of claims 1 to 6, wherein the precooling system (24) comprises a material (48) permeable to water and defining a plurality of ducts (50) having inlets (52) at an inlet surface (54) of the material (48), and outlets (56) at an outlet surface (58) of the material (48), the precooling system (24) being adapted for contacting the stream of water (26) with an upper part (60) of the material (48), the stream of water (26) being intended to soak the material (48), to move downwards by gravity and progressively evaporate in the ducts (50), the stream of air (28) being intended to split into the ducts (50) and provide the stream of cooling air (30) at the outlets (56) of the ducts (50).

**8.** The vehicle (10; 100) according to claim 7, wherein the material (48) comprises a lower part (64) adapted to receive the non-evaporated part (46) of the stream of water (26), the non-evaporated part (46) being intended to exit the lower part (64) by gravity and flow toward the reservoir (20).

**9.** The vehicle (10; 100) according to claim 7 or 8, wherein the material (48) forms a layer (68) extending perpendicularly to a first direction (T) defined by the vehicle (10; 100), the first direction (T) being horizontal when the vehicle (10; 100) moves on a horizontal surface (S).

**10.** The vehicle (10; 100) according to claim 9, wherein the layer (68) has a thickness (E) in said first direction (T) comprised between 10 and 20 cm, preferably between 13 and 17 cm, and more preferably of approximately 15 cm.

**11.** The vehicle (10; 100) according to any one of claims 9 to 10, wherein the first direction (T) is perpendicular to a normal movement direction (L) of the vehicle (10; 100).

**12.** The vehicle (100) according to any one of claims 9 to 11, wherein the precooling system (24) comprises a second layer (102) of said material (48), and the cooling cycle (18) comprises a second heat exchanger (104) connected in parallel with the heat exchanger (34) with respect to the stream of heated refrigerant (36), the second layer (102) and the second heat exchanger (104) being located symmetrically of the layer (68) and the heat exchanger (34) with respect to a median plane (M) of the vehicle (100), the median plane (M) being perpendicular to the first direction (T).

**13.** The vehicle (10; 100) according to any one of claims 7 to 12, wherein the ducts (50) are inclined by at least 10° with respect to a plane (P) defined by the vehicle (10; 100) and horizontal when the vehicle (10; 100) moves on a horizontal surface (S).

**14.** Process comprising the following steps:

> - obtaining a vehicle (10; 100) as described by any one of claims 1 to 13,
> - providing said power (16) to the propulsion module (12),
> - using the cooling cycle (18) in order to cool the fuel cell power module (14), the heat exchanger (34) receiving the stream of heated refrigerant (36) from the fuel cell power module (14) and the stream of cooling air (30), and producing the stream of cooled refrigerant (38) and the stream of heated air (40), the fuel cell power module (14) receiving the stream of cooled refrigerant (38) and producing the stream of heated refrigerant (36),
> - using the reservoir (20) in order to collect the residual water (22) from the fuel cell power module (14), and
> - using the precooling system (24) in order to receive the stream of water (26) from the reservoir (20) and the stream of air (28), to evaporate said part of the stream of water (26) in the stream of air (28), and to cool the stream of air (28) and obtain the stream of cooling air (30).

**Amended claims in accordance with Rule 137(2) EPC.**

1. A railway vehicle (10; 100) comprising:

   - a propulsion module (12),
   - a fuel cell power module (14) adapted for providing power (16) to the propulsion module (12),
   - a cooling cycle (18) adapted for cooling the fuel cell power module (14), and comprising at least one heat exchanger (34) configured for receiving at least one stream of heated refrigerant (36) from the fuel cell power module (14) and at least one stream of cooling air (30), and for producing at least one stream of cooled refrigerant (38) and at least one stream of heated air (40), the fuel cell power module (14) being adapted for receiving the stream of cooled refrigerant (38) and producing the stream of heated refrigerant (36),
   - a reservoir (20) adapted for collecting residual water (22) from the fuel cell power module (14), and
   - a precooling system (24) adapted for receiving at least one stream of water (26) from the reservoir (20) and at least one stream of air (28) and for evaporating part of the stream of water (26) in the stream of air (28) in order to cool the stream of air (28) and obtain the stream of cooling air (30),

   wherein the precooling system (24) comprises a material (48) permeable to water and defining a plurality of ducts (50) having inlets (52) at an inlet surface (54) of the material (48), and outlets (56) at an outlet surface (58) of the material (48), the precooling system (24) being adapted for contacting the stream of water (26) with an upper part (60) of the material (48), the stream of water (26) being intended to soak the material (48), to move downwards by gravity and progressively evaporate in the ducts (50), the stream of air (28) being intended to split into the ducts (50) and provide the stream of cooling air (30) at the outlets (56) of the ducts (50),

   wherein the material (48) forms a layer (68) extending perpendicularly to a first direction (T) defined by the vehicle (10; 100), the first direction (T) being horizontal when the vehicle (10; 100) moves on a horizontal surface (S), and wherein the first direction (T) is perpendicular to a normal movement direction (L) of the vehicle (10; 100).

2. The vehicle (10; 100) according to claim 1, wherein the fuel cell power module (14) is configured to receive at least part of the stream of heated air (40) and use at least part of the stream of heated air (40) as an oxidizer in order to produce the power (16).

3. The vehicle (10; 100) according to claim 1 or 2, wherein the precooling system (24) is adapted for returning a non-evaporated part (46) of the stream of water (26) to the reservoir (20).

4. The vehicle (10; 100) according to any one of claims 1 to 3, further comprising at least one fan (32) adapted for moving the stream of cooling air (30) with respect to the heat exchanger (34), the fan (32) being also adapted for moving the stream of air (28) with respect to the precooling system (24).

5. The vehicle (10; 100) according to claim 4, wherein the fan (32) is located downstream of the heat exchanger (34) and intended to be surrounded by the stream of heated air (40) coming from the heat exchanger (34).

6. The vehicle (10; 100) according to any one of claims 1 to 5, wherein the precooling system (24) is configured to have an efficiency $\varepsilon$ greater than 80%, preferably greater than or equal to 85%, at least when a dry-bulb temperature $T_{i,db}$ of the stream of air (28) is comprised between 35°C and 42°C and the stream of air (28) has a relative humidity comprised between 8% and 70%, wherein $\varepsilon = (T_{i,db} - T_{o,db}) / (T_{i,db} - T_{i,wb})$,

   $T_{o,db}$ being a dry-bulb temperature of the stream of cooling air (30), and
   $T_{i,wb}$ being a wet-bulb temperature of the stream of air (28).

7. The vehicle (10; 100) according to any one of claims 1 to 6, wherein the material (48) comprises a lower part (64) adapted to receive the non-evaporated part (46) of the stream of water (26), the non-evaporated part (46) being intended to exit the lower part (64) by gravity and flow toward the reservoir (20).

8. The vehicle (10; 100) according to any one of claims 1 to 7, wherein the layer (68) has a thickness (E) in said first direction (T) comprised between 10 and 20 cm, preferably between 13 and 17 cm, and more preferably of approximately 15 cm.

9. The vehicle (100) according to any one of claims 1 to 8, wherein the precooling system (24) comprises a second layer (102) of said material (48), and the cooling cycle (18) comprises a second heat exchanger (104) connected in parallel with the heat exchanger (34) with respect to the stream of heated refrigerant (36), the second layer (102) and the second heat exchanger (104) being located symmetrically of the layer (68) and the heat exchanger (34) with respect to a median plane (M) of the vehicle (100), the median plane (M) being perpendicular to the first direction (T).

10. The vehicle (10; 100) according to any one of claims 1 to 9, wherein the ducts (50) are inclined by at least 10° with respect to a plane (P) defined by the vehicle (10; 100) and horizontal when the vehicle (10; 100) moves on a horizontal surface (S).

11. Process comprising the following steps:

- obtaining a vehicle (10; 100) as described by any one of claims 1 to 10,
- providing said power (16) to the propulsion module (12),
- using the cooling cycle (18) in order to cool the fuel cell power module (14), the heat exchanger (34) receiving the stream of heated refrigerant (36) from the fuel cell power module (14) and the stream of cooling air (30), and producing the stream of cooled refrigerant (38) and the stream of heated air (40), the fuel cell power module (14) receiving the stream of cooled refrigerant (38) and producing the stream of heated refrigerant (36),
- using the reservoir (20) in order to collect the residual water (22) from the fuel cell power module (14), and
- using the precooling system (24) in order to receive the stream of water (26) from the reservoir (20) and the stream of air (28), to evaporate said part of the stream of water (26) in the stream of air (28), and to cool the stream of air (28) and obtain the stream of cooling air (30).

EP 4 546 474 A1

**FIG.1**

## FIG.2

## FIG.3

Europäisches
Patentamt
European
Patent Office
Office européen
des brevets

# EUROPEAN SEARCH REPORT

**Application Number**

EP 23 30 6877

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/293972 A1 (KOTI ARCHIT [US] ET AL) 15 September 2022 (2022-09-15) | 1,3-5, 7-12,14 | INV. H01M8/04029 |
| A | * paragraphs [0060], [0078] – [0080], [0086], [0087], [0113], [0114]; figures 2,13 * | 13 | H01M8/04007 H01M8/04089 H01M8/04119 H01M8/04291 |
| X | CN 114 792 822 A (BEIJING INSTITUTE TECH) 26 July 2022 (2022-07-26) | 1,5-12, 14 | ADD. |
| A | * figures 1,9 * | 13 | B61C3/00 |
| X | US 2011/165479 A1 (GUENTHER DETLEF [DE]) 7 July 2011 (2011-07-07) * paragraphs [0002], [0017], [0019], [0020]; figure 1 * | 1,2,4,14 | |

**TECHNICAL FIELDS SEARCHED (IPC)**

H01M

The present search report has been drawn up for all claims

| Place of search | Date of completion of the search | Examiner |
|---|---|---|
| Munich | 3 May 2024 | Raimondi, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 30 6877**

This annex lists the patent family members relating to the patent documents cited in the above-mentioned European search report.
The members are as contained in the European Patent Office EDP file on
The European Patent Office is in no way liable for these particulars which are merely given for the purpose of information.

**03-05-2024**

| Patent document cited in search report | | Publication date | Patent family member(s) | | Publication date |
|---|---|---|---|---|---|
| US 2022293972 | A1 | 15-09-2022 | CN | 115084578 A | 20-09-2022 |
| | | | US | 2022293972 A1 | 15-09-2022 |
| CN 114792822 | A | 26-07-2022 | CN | 114792822 A | 26-07-2022 |
| | | | CN | 216161771 U | 01-04-2022 |
| US 2011165479 | A1 | 07-07-2011 | DE | 102004038633 A1 | 17-03-2005 |
| | | | US | 2005037250 A1 | 17-02-2005 |
| | | | US | 2011165479 A1 | 07-07-2011 |

For more details about this annex : see Official Journal of the European Patent Office, No. 12/82